**Europäisches Patentamt**

**European Patent Office**

**Office européen des brevets**

(19)

(11) Veröffentlichungsnummer: **0 201 671**
**B1**

(12) **EUROPÄISCHE PATENTSCHRIFT**

(45) Veröffentlichungstag der Patentschrift:
**18.05.88**

(21) Anmeldenummer: **86102416.4**

(22) Anmeldetag: **25.02.86**

(51) Int. Cl.⁴: **F 23 K 3/02, F 23 C 11/02**

(54) **Düse zum pneumatischen Einbringen von Feststoffen.**

(30) Priorität: **17.04.85 DE 3513764**

(43) Veröffentlichungstag der Anmeldung:
**20.11.86 Patentblatt 86/47**

(45) Bekanntmachung des Hinweises auf die Patenterteilung:
**18.05.88 Patentblatt 88/20**

(84) Benannte Vertragsstaaten:
**AT BE DE FR GB IT NL SE**

(56) Entgegenhaltungen:
**EP-A-0 073 650**
**DE-A-3 019 701**
**DE-A-3 411 757**
**FR-A-2 355 547**

(73) Patentinhaber: **Deutsche Babcock Werke Aktiengesellschaft, Duisburger Strasse 375, D-4200 Oberhausen 1 (DE)**

(72) Erfinder: **Bunthoff, Dirk, Peter Burggraf Weg 5, D-4300 Essen 14 (DE)**
Erfinder: **Hildebrandt, Rainer, Eupenstrasse 7, D-4300 Essen 15 (DE)**

(74) Vertreter: **Müller, Jürgen, Dipl.- Ing., Deutsche Babcock AG Lizenz- und Patentabteilung Duisburger Strasse 375, D-4200 Oberhausen 1 (DE)**

EP 0 201 671 B1

## Beschreibung

Die Erfindung betrifft eine Düse zum pneumatischen Einbringen von Feststoffen in einen Reaktionsraum, insbesondere in eine Wirbelschichtfeuerung mit den Merkmalen des Oberbegriffes des Anspruches 1.

Eine solche Düse ist aus der DE-OS-3 019 701 bekannt. Diese Düse hat den Vorteil, daß nach dem Abstellen der Feststoff-Luft-Zufuhr die Düse sich nicht verstopft und daß der Verschleiß gering gehalten werden kann. Jedoch ist die Quervermischung der eingetragenen Feststoffe gering, selbst dann, wenn unterhalb der Haube ein Ablenkteller vorgesehen ist. Die Quervermischung des einzutragenden Feststoffes ist bei Düsen verbessert, die mit seitlich angeordneten Austrittsstutzen versehen sind. Dieser Vorteil wird aber mit einem verstärkten Verschleiß der Düsen erkauft.

Der Erfindung liegt die Aufgabe zugrunde, die gattungsgemäße Düse derart zu gestalten, daß die Quervermischung der eingetragenen Feststoffe verbessert wird.

Diese Aufgabe wird bei einer gattungsgemäßen Düse durch die kennzeichnenden Merkmale des Anspruches 1 gelöst. Eine vorteilhafte Ausgestaltung der Erfindung ist in dem Anspruch 2 angegeben.

Durch die aus den Austrittsbohrungen unterhalb der Haube austretende Luft wird das durch das Rohr eingespeiste Feststoff-Luft-Gemisch horizontal beschleunigt. Diese Horizontalbeschleunigung führt zu einer wesentlichen Verbesserung der Quervermischung des Feststoffes innerhalb des Reaktionsraumes. Gleichzeitig bleiben die der gattungsgemäßen Düse anhaftenden Vorteile hinsichtlich der Vermeidung von Verstopfungen und des Verschleißes erhalten.

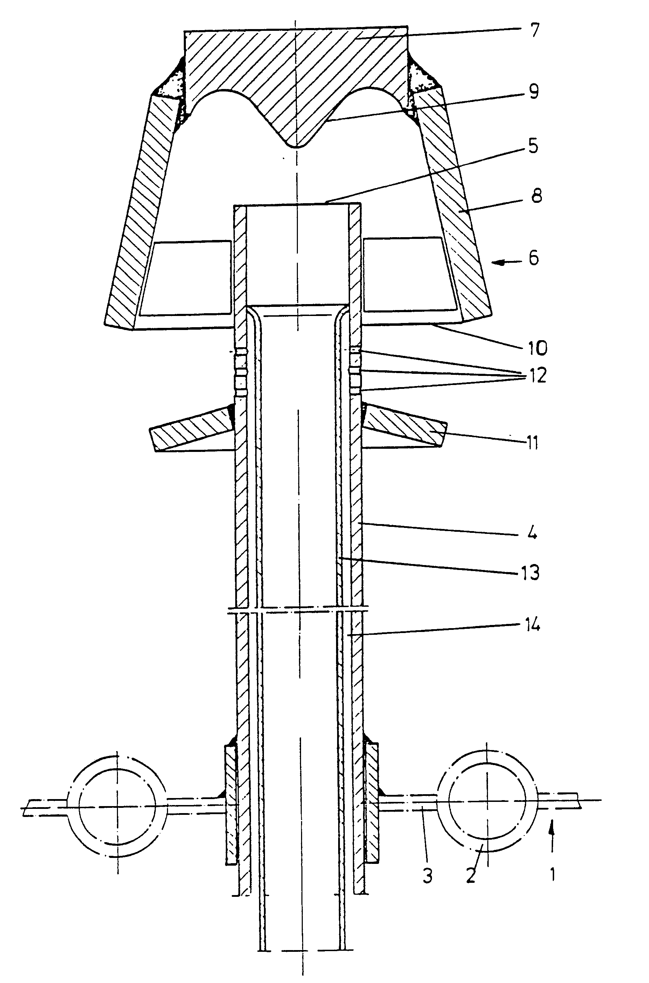

Ein Ausführungsbeispiel der Erfindung ist in der Zeichnung dargestellt und wird im folgenden näher erläutert. Die Zeichnung stellt den Längsschnitt durch eine Düse gemäß der Erfindung dar.

Die Düse zum pneumatischen Einbringen eines Feststoff-Luft-Gemisches ragt in einen Reaktionsraum hinein, der im dargestellten Fall durch eine Wirbelschichtfeuerung gegeben ist. Das Wirbelbett der Wirbelschichtfeuerung liegt auf einem Boden 1 auf, der aus Rohren 2 gebildet ist, die über Stege 3 gasdicht miteinander verbunden sind. Unterhalb des Bodens 1 befindet sich ein Luftkasten, der an eine Luftquelle angeschlossen und mit der Wirbelschichtfeuerung durch den Boden 1 durchdringende, nicht dargestellte Luftdüsen verbunden ist.

Die Düse besteht aus einem Rohr 4 mit einer axialen Austrittsöffnung 5. Auf dem Rohr 4 ist eine Haube 6 befestigt, die aus einem Haubenboden 7 und einer konischen Seitenwand 8 besteht. Der Haubenboden 7 ist mit einer Umlenkfläche 9 versehen, die in einem axialen Abstand der Austrittsöffnung 5 gegenübersteht.

Zwischen der Seitenwand 8 der Haube 6 und der Außenwand des Rohres 4 ist ein axialer Austrittsquerschnitt 10 vorhanden.

Unterhalb des axialen Austrittsquerschnittes 10 zwischen der Haube 6 und dem Rohr 4 ist auf dem Rohr 4 ein Ablenkteller 11 befestigt. Der Ablenkteller 11 kann nach unten geneigt sein.

Unterhalb des Austrittsquerschnittes 10 der Haube 6 und, falls ein Ablenkteller 11 vorhanden ist, oberhalb dieses Ablenktellers 11 sind in der Wand des Rohres 4 Austrittsbohrungen 12 vorgesehen. In das Rohr 4 ist konzentrisch ein Innenrohr 13 eingesetzt, wobei zwischen dem Innenrohr 13 und dem Rohr 4 ein Zwischenraum 14 besteht. Das Innenrohr 13 ist in Strömungsrichtung oberhalb der Austrittsbohrungen 12 dicht mit der Innenwand des Rohres 4 verbunden.

Das Innenrohr 13 ist durch den Luftkasten unterhalb des Bodens 1 hindurchgeführt und an eine nicht dargestellte Förderleitung angeschlossen. Der Zwischenraum 14 kann wie dargestellt, zum Luftkasten hin offen sein, so daß Luft aus dem Luftkasten aufgrund der Druckdifferenz zwischen dem Luftkasten und der Wirbelschichtfeuerung durch den Zwischenraum 14 strömen und aus den Austrittsbohrungen 12 austreten kann. Es kann auch Luft verwendet werden, die unter einem höheren Druck als dem im Luftkasten steht. In diesem Fall ist eine gesonderte Luftquelle von entsprechendem Druck vorzusehen.

Der Feststoff (Kohle, Bettasche) der mit Hilfe von Trägerluft durch das Innenrohr 13 gefördert wird, tritt aus der Austrittsöffnung 5 des Rohres 4 aus, wird an der Umlenkfläche 7 schonend umgelenkt und tritt durch den Austrittsquerschnitt 10 in das Wirbelbett ein. Bei Austritt aus dem Austrittsquerschnitt 10 wird das Feststoff-Luft-Gemisch durch die aus den Austrittsöffnungen 12 ausströmende Luft in horizontaler Richtung beschleunigt und damit über einen größeren Querschnitt des Wirbelbettes verteilt.

Die Erfindung ist anhand einer Düse zum pneumatischen Einbringen von Kohle oder Bettasche in eine Wirbelschichtfeuerung beschrieben. Die Erfindung kann auch für die pneumatische Förderung von Feststoffen in einen anderen Reaktionsraum verwendet werden.

## Patentansprüche

1. Düse zum pneumatischen Einbringen von Feststoffen in einen Reaktionsraum, insbesondere in eine Wirbelschichtfeuerung, bei der das in den Reaktionsraum hineinragende, offene Ende eines ein Feststoff-Luft-Gemisch führenden Rohres (4) in einem Abstand von einer Haube (6) umgeben ist, die in dem der Austrittsöffnung (8) gegenüberliegenden Bereich mit einer Umlenkfläche (9) versehen ist, dadurch gekennzeichnet, daß in der Wand des Rohres (4) unterhalb der Unterkante der Haube (6) Austrittsbohrungen (12) vorgesehen sind, daß unter Bildung eines ringförmigen, von Luft durchströmten Zwischenraumes (14) innerhalb des Rohres (4) konzentrisch ein Innenrohr (13) angeordnet ist, das oberhalb der Austrittsbohrungen (12) dicht mit der Innenwand des Rohres (4) verbunden ist.

2. Düse nach Anspruch 1, dadurch gekennzeichnet, daß der Druck der den Zwischenraum (14) durchströmenden Luft größer ist als der Druckverlust, der sich an der Eintrittsstelle des Feststoff-Luft-Gemisches in dem Reaktionsraum einstellt.

**Revendications**

1.Tuyère pour l'introduction pneumatique de substances solides dans une chambre de réaction, en particulier dans un foyer à couche fluidisée, sur laquelle l'extrémité ouverte, faisant saillie dans la chambre de réaction, d'un tube (4) servant au transfert du mélange air-particules solides est entourée, à une certaine distance, d'une coiffe (6) dotée, dans sa zone orientée vers l'ouverture de sortie (8), d'une surface de déflection (9), caractérisée en ce que dans la cloison du tube (4), sont prévus des perçages de sortie (12) au dessous du bord inférieur de la coiffe (6), et un tube intérieur (13) est disposé à l'intérieur du tube (4) et concentriquement à lui, avec constitution d'un espace intermédiaire annulaire (14) traversé par l'air, se raccordant de façon étanche, au dessus des perçages de sortie (12), à la paroi intérieure du tube (4).

2. Tuyère selon la revendication 1, caractérisée en ce que la pression de l'air traversant l'espace intermédiaire (14) est supérieure à la perte de charge se produisant dans la chambre de réaction au point d'introduction du mélange air-particules solides.

**Claims**

1. Nozzle for the pneumatic introduction of solid substances into a reaction space, in particular into a fluidised bed furnace, in which the end of a tube (4) conducting a mixture of solid substance and air projects into the reaction space and is surrounded at a spacing by a hood (6), which is provided with a deflecting surface (9) in the region lying opposite the exit opening (8), characterised thereby, that exit bores (12) are provided in the wall of the tube (4) underneath the lower edge of the hood (6) and that an inner tube (13), which is sealingly connected with the inside wall of the tube (4) above the exit bores (12), is arranged concentrically within the tube (4) while forming an annular intermediate space (14) flowed through by air.

2. Nozzle according to claim 1, characterised thereby, that the pressure of the air flowing through the intermediate space (14) is greater than the pressure loss setting in at the place of entry of the mixture of solid substance and air into the reaction space.